# FASCICULE DE BREVET EUROPEEN

(11) **EP 3 812 302 B1**
(45) Date de publication et mention de la délivrance du brevet: **30.04.2025**
(21) Numéro de dépôt: 20203939.2
(22) Date de dépôt: 26.10.2020
(51) Int. Cl.: B65F 1/12, B65F 1/14, A22B 7/00

(54) **BAC D'ÉQUARRISSAGE À RÉTABLISSEMENT AUTOMATIQUE**
TIERKÖRPERBESEITIGUNGSBEHÄLTER MIT AUTOMATISCHER RÜCKFÜHRUNG
CARCASSE CONTAINER WITH AUTOMATIC REINSTATEMENT

(30) Priorité: 25.10.2019 FR 1911957; 27.03.2020 FR 2003064
(43) Date de publication de la demande: 28.04.2021
(73) Titulaire: Pub Up, 54850 Messein (FR)
(72) Inventeur: LACROIX-RIGAL, Sophie, 54280 Sorneville (FR); CHARLES, Paul, 54140 Jarville la Malgrange (FR)
(74) Mandataire: Rhein, Alain

(56) Documents cités:
- FR-A1- 2 952 623

## Description

La présente invention concerne un dispositif de manutention de bac d'équarrissage comportant un palonnier de structure sensiblement en U comprenant une traverse de manutention reliant, sensiblement par une de leurs extrémités, deux bras de préhension s'étendant de part et d'autre de parois opposées du bac d'équarrissage ou d'une structure support d'au moins un bac d'équarrissage, et rendus solidaires, respectivement, dudit bac d'équarrissage ou de ladite structure support par l'intermédiaire de moyens d'articulation autour d'un même axe horizontal de pivotement.

La présente invention concerne le domaine des bacs d'équarrissage et plus particulièrement celui des dispositifs de manutention de ces bacs pour leur utilisation sur des sites d'élevage d'animaux, de boucherie, d'abattoir....

A titre d'exemple, il est utilisé de tels bacs d'équarrissage pour y déverser, après dépeçage d'animaux, certaines parties impropres à la consommation : peau, os, graisses, plumes, etc..

Ces déchets sont prélevés au niveau de ces sites d'élevage par des sociétés de transport au moyen d'un matériel dédié pour les acheminer vers des sites industriels spécialisés dans le traitement de ces déchets.

Les véhicules de transport spécifiques utilisés pour collecter ces déchets équarrissage comportent, généralement, une benne, ainsi qu'un bras articulé de manutention équipé à son extrémité d'une pince de préhension ou un crochet. Au moyen de cette pince ou ce crochet, un opérateur peut saisir tout à la fois des carcasses entières d'animaux pour les déposer dans la benne et un bac d'équarrissage en vue de le déverser dans cette dernière.

Dans ce but, ces bacs d'équarrissage sont souvent équipés d'un palonnier, dénommé aussi potence, de structure en U, comprenant une traverse de manutention d'où s'étendent deux bras de préhension montés articulés sur des côtés opposés d'un bac d'équarrissage.

En somme, celui-ci est monté basculant, autour d'un axe de pivotement horizontal sur ce palonnier, tandis que des moyens de blocage adaptés sont prévus pour maintenir ce palonnier dans un plan sensiblement vertical au-dessus du bac d'équarrissage tout en évitant le renversement de ce dernier pendant les phases de manutention.

Plus particulièrement, au moyen de la pince ou du crochet du bras articulé du véhicule de transport, l'opérateur vient saisir la traverse de manutention du palonnier pour soulever le bac d'équarrissage et le présenter au-dessus de la benne du véhicule transport. Sont alors débloqués les moyens de blocage en rotation précités pour qu'ils en résultent le basculement du bac équarrissage et le déversement de son contenu dans la benne.

Ce basculement automatique du bac équarrissage, une fois les moyens de blocage libérés, est la conséquence d'un montage pivotant de ce bac d'équarrissage sur les bras de préhension sous le centre de gravité de ce bac d'équarrissage.

Généralement un tel bac d'équarrissage est, en position normale d'usage, refermé au moyen d'un couvercle. Dans certains cas il convient de retirer ce couvercle pour assurer cette opération de vidange. Ce couvercle peut encore être monté, articulé, sur le bac équarrissage et prévu apte à s'ouvrir lors du déversement de ce dernier dans la benne du véhicule de transport.

Le problème actuel réside dans la difficulté de remettre le bac équarrissage depuis sa position renversée dans sa position normale d'usage.

Le plus fréquemment, cette opération est menée manuellement, c'est-à-dire au moment de reposer au sol le bac d'équarrissage vidangé. Ainsi, lors de cette manœuvre un opérateur doit redresser le bac d'équarrissage par rotation de 180° environ, ceci, autant que possible, avant qu'il ne soit totalement déposé au sol et libéré par la pince de manutention du véhicule transport.

Il n'est pas rare, d'ailleurs, qu'au moment de relâcher le palonnier, celui-ci retombe au sol et il convient, là encore, de le redresser manuellement et d'activer les moyens de blocage en rotation pour l'immobiliser dans une position sensiblement verticale au-dessus au bac d'équarrissage en vue d'une prochaine manutention de vidange.

Il est également connu des bacs d'équarrissage montés pivotant sous un palonnier, capables de se redresser automatiquement après basculement et déversement de leur contenu.

Il s'agit essentiellement de bac de grande contenance, dont le contenu est capable d'imprimer à ce dernier, durant la première phase de retournement, une impulsion en rotation telle que le bac, par inertie cinématique, vient poursuivre son pivotement sur 180° supplémentaire, jusqu'à venir se rétablir dans sa position initiale. Il est alors retenu une nouvelle fois dans cette dernière par les moyens de blocage en rotation définis apte à se réactiver automatiquement dans cette position redressée du bac.

Pour autant, ce rétablissement intervient de manière aléatoire, précisément dans la mesure où il dépend de cette impulsion communiquée au bac par le contenu qui n'est pas forcément constant sans compter que certains déchets restés collés au fond du bac et peuvent modifier l'inertie cinématique de ce dernier.

A noter que l'on connait déjà par le document FR2.952.623, un dispositif de manutention de bac d'équarrissage conforme au préambule de la revendication 1.

Pour remédier aux inconvénients de cet état de la technique, l'invention concerne un dispositif de manutention de bac d'équarrissage conforme à la revendication 1.

En somme, le principe de fonctionnement de ce dispositif de manutention consiste en ce qu'en positionnant, dans un premier temps, l'axe de pivotement du bac d'équarrissage sous son centre de gravité, on favorise son retournement et son déversement, tandis qu'en permettant, ensuite, à cet axe de pivotement de se déplacer par rapport à ce centre de gravité on favorise le rétablissement du bac d'équarrissage, c'est-à-dire sa rotation depuis cette position renversée vers sa position normale d'usage.

D'autres buts avantagent la présente invention apparaîtront cours de la description qui va suivre se rapportant à un exemple de réalisation donnée à titre indicatif et non limitatif.

La compréhension de cette description sera facilitée en se référant aux dessins ci-joint dans lesquels :
- la figure 1 est une illustration schématisée en perspective du dispositif de manutention dans une position normale d'usage du bac d'équarrissage ;

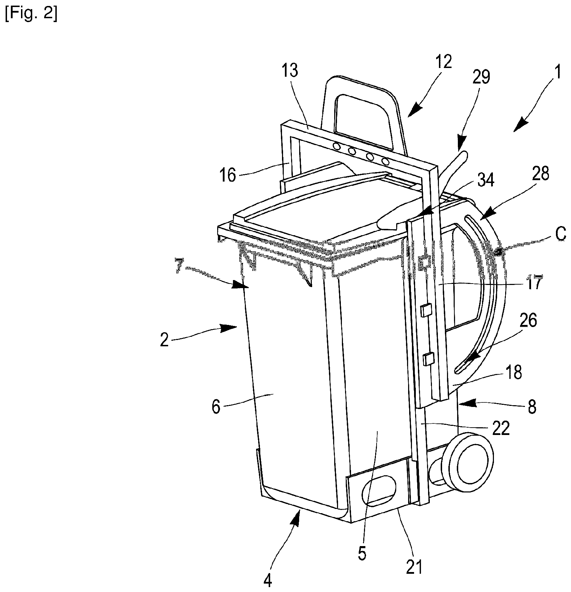

- la figure 2 est une illustration similaire à la figure 1, le dispositif de manutention étend en phase de levage du bac d'équarrissage ;

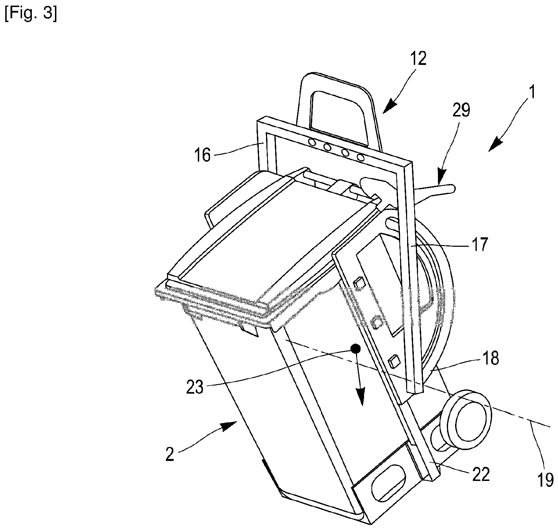

- la figure 3 est une illustration similaire, les moyens de blocage en rotation étant libérés et le bac d'équarrissage étend en cours de basculement ;
- la figure 4 illustre ce même bac d'équarrissage totalement renversé ;

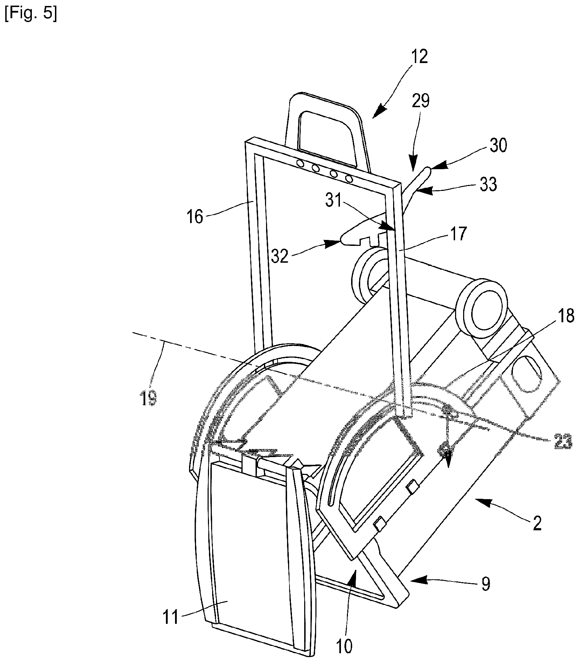

- la figure 5 illustre le bac d'équarrissage en phase de rétablissement, après commande de déblocage des moyens de retenue permettant le déplacement des moyens articulations par rapport au bras de préhension du palonnier
- la figure 6 représente ce bac d'équarrissage en position totalement rétablie et avant dépose au sol

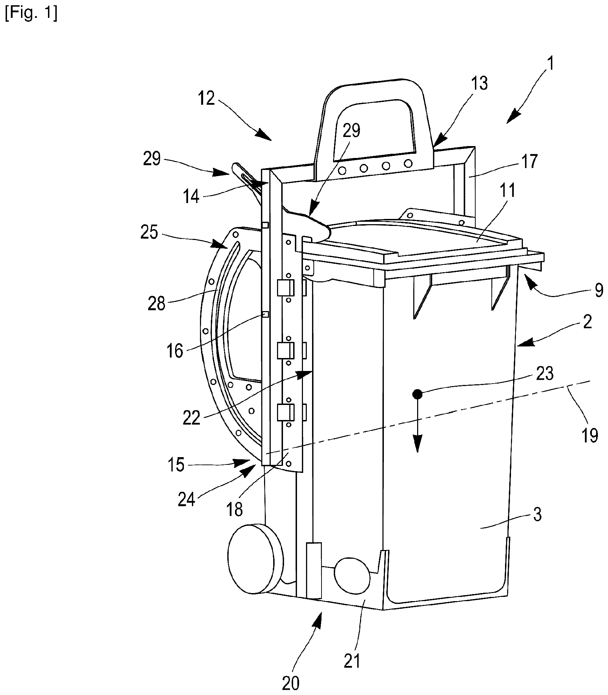

Tel que représenté dans la figure 1 des dessins ci-joint, la présente invention concerne le domaine des bacs d'équarrissage et a trait, plus particulièrement, à un dispositif de manutention 1 à destination de ces bacs.

De manière habituelle, un tel bac d'équarrissage 2 comporte un contenant 3 de section sensiblement parallélépipédique comprenant un fond 4 d'où s'étend quatre côtés 5, 6, 7, 8 opposés deux 5 ; 7 à deux 6 ; 8.

En partie supérieure 9 ce bac d'équarrissage comporte une ouverture 10 au travers de laquelle sont insérés les déchets d'équarrissage et en sont déversés. Cette ouverture 10 est susceptible d'être refermée au moyen d'un couvercle 11 monté articulé sur cette partie supérieure 9 du bac 2.

Il convient d'observer que si les figures des dessins ci-joints illustrent un modèle particulier de bac d'équarrissage. Pour autant, la présente invention n'y est nullement limitée, tant en ce qui concerne la forme que le volume. En particulier, le bac illustré est de type à deux roues, de faible volume. L'invention s'applique tout autant à des bacs de volume beaucoup plus conséquent équipés, souvent dans ce cas, de quatre roues pour en faciliter la manutention au sol.

Le dispositif de manutention 1, selon l'invention, comporte un palonnier 12 de structure sensiblement en U comprenant une traverse de manutention 13 reliant à une 14 de leurs extrémités 14 ; 15 deux bras de préhension 16, 17.

En position normale d'usage, ces deux bras de préhension 16, 17 s'étendent sensiblement verticalement le long de côtés opposés 5, 7 du bac d'équarrissage 2 et sont rendus solidaires de ce dernier, sensiblement à leur extrémité 15 opposée à la traverse de manutention 13, par l'intermédiaire de moyens d'articulations 18 autour d'un même axe horizontal 19.

Il convient d'observer que, plutôt que d'être solidarisé directement par ces moyens articulations 18 à un bac d'équarrissage 2, ces bras de préhension 16, 17 peuvent coopérer avec une structure support 20 d'au moins un bac d'équarrissage 2, comme c'est le cas dans le mode de réalisation illustré dans les figures.

Dans ce cas, cette structure support 20 comporte une embase 21 sur laquelle repose le bac d'équarrissage 2. Sur cette embase 21 sont rapportés verticalement des montants 22 venant s'étendre sur les côtés opposés 5, 7 du bac équarrissage 2. Avantageusement selon l'invention exposée ci-après, les moyens d'articulations 18 sont solidarisés aux montants 22,

Plus particulièrement, ces moyens d'articulation 18 sur les côtés opposés 5, 7 du bac d'équarrissage 2 sont rendus solidaires de ce dernier ou, selon le cas, de la structure support 20, notamment de ses montants 22, de manière mobile selon une course C de déplacement déterminée par rapport au centre de gravité 23 dudit bac d'équarrissage 2, selon le cas, de ce dernier et de la structure support 20 sur laquelle il est monté.

Avantageusement, cette mobilité des moyens d'articulation 18 s'étend entre une première position 24 dans laquelle l'axe de pivotement 19 se situe sous ce centre de gravité 23 lorsque le bac d'équarrissage 2 est en position normale d'usage, ouverture 10 orientée vers le haut, et au moins une seconde position 25 dans laquelle cet axe de pivotement 19 se situe au-dessus de ce centre de gravité 23 au moins dans cette même position normale d'usage du bac équarrissage 2.

Des moyens de retenue 26 assurent le maintien de ces moyens d'articulation 18 dans leur première position 24 lorsque le bac équarrissage 2 est en position normale d'usage.

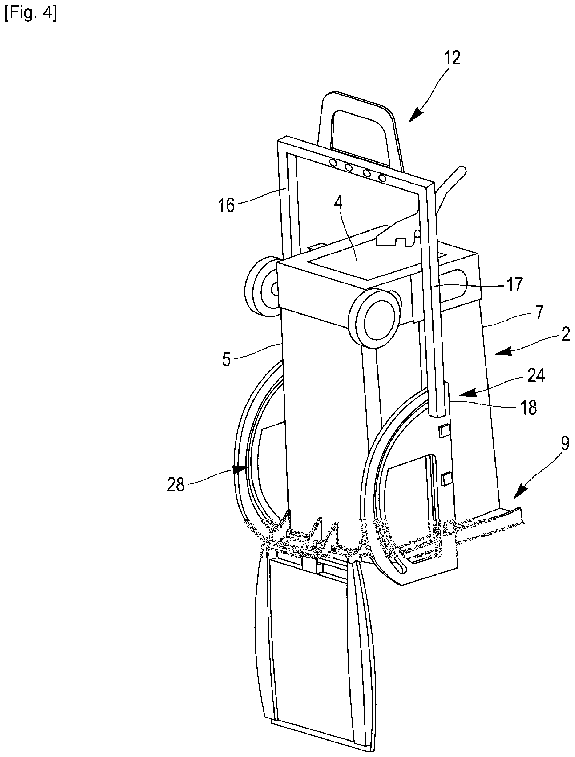

Il est également prévu des moyens de commande déblocage de ces moyens de retenue 26 lorsque le bac d'équarrissage 2 est en cours de déversement et/ou en position renversée, comme visible dans la figure 4 pour libérer lesdits moyens d'articulation 18 de leur première position 24 et leur permettre de se déplacer en direction de leur seconde position 25.

Avantageusement, les moyens d'articulation 18 sont montés sur des coulisses 28 équipant les côtés opposés 5, 7 du bac d'équarrissage 2 ou les montants 22 de la structure support 20.

Préférentiellement, ces coulisses 28 décrivent une trajectoire de coulissement curviligne, sensiblement en arc de cercle, que viennent emprunter les moyens d'articulation 18, une fois les moyens de retenue 26 débloqués, ceci grâce à l'énergie cinétique de rotation emmagasinée par le bac d'équarrissage 2 sous l'effet de son basculement en position renversée de vidange.

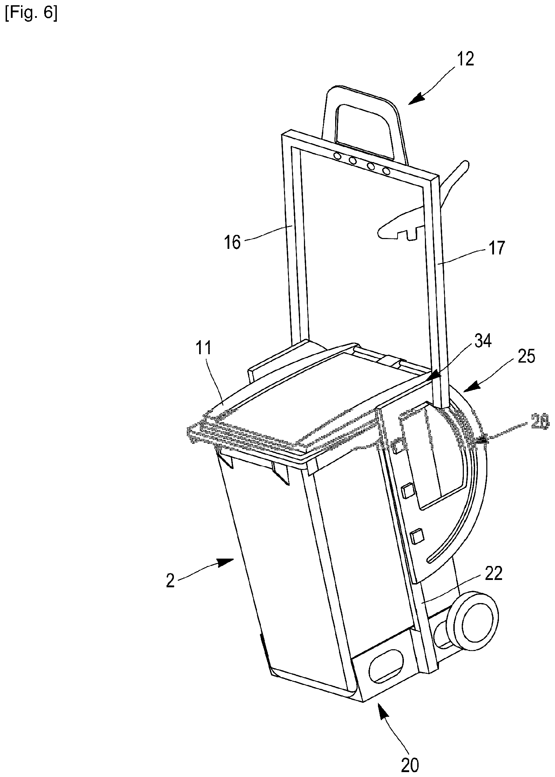

En empruntant ainsi cette trajectoire curviligne imprimée par les coulisses 28 les moyens d'articulation 18 passent très vite de leur première position 24, sous le centre de gravité 23 du bac d'équarrissage 2 selon le cas, de ce dernier et de la structure support 20 sur laquelle il est monté, dans une position au-dessus de ce centre de gravité 23, ce qui conduit à favoriser la poursuite de la rotation du bac équarrissage 2 pour repasser de sa position renversée dans sa position redressée visible dans la figure 6.

Comme on le constate dans cette figure 6, dans cette position le bac équarrissage 2 est essentiellement suspendu sous les bras de préhension 16, 17 du palonnier 12.

En venant reposer le bac d'équarrissage 2 au sol et sous le poids de ce palonnier 12, les moyens d'articulation 18 aux extrémités de ces bras de préhension 16, 17 empruntent le chemin inverse le long des coulisses 28 jusqu'à regagner leur première position 24.

Avantageusement, les moyens de retenue 26 sont définis à rappel automatique en position active de retenue pour immobiliser immédiatement dans cette première positon 24 lesdits moyens d'articulation 18 en vue d'une prochaine manipulation de vidange.

À noter que le dispositif de manutention 1 selon l'invention comporte encore des moyens de blocage en rotation 29 du palonnier 12 dans une position redressée par rapport au bac d'équarrissage 2. Ces moyens de blocage en rotation 29 ont notamment pour fonction de maintenir ce palonnier 12 dans cette position redressée, sensiblement verticale, lorsque le bac d'équarrissage 2 est en phase d'usage reposant au sol.

Ils sont à commande de déblocage manuel pour libérer la rotation du bac d'équarrissage 2 ou de la structure support 20 lorsque le dispositif de manutention 1 a été amené, par exemple, au-dessus d'une benne dans laquelle doit être déversée le contenu du bac d'équarrissage 2.

Substantiellement, ces moyens de blocage rotation 29 se présentent, comme plus particulièrement visible sur les figures, sous forme d'un levier 30 monté basculant autour d'un axe 31 sensiblement horizontal sur le palonnier 12. Ce levier 30 comporte un bras d'accrochage 32 s'étendant d'un côté de l'axe de pivotement et prolongé, du côté opposé à cet axe 31, par un bras de commande 33.

Au travers de son poids plus important par rapport au bras commande 33, le bras d'accrochage 32 est défini pour retomber, naturellement, dans sa position de verrouillage, dans laquelle il est conçu pour venir s'engager sur une pièce accrochage 34 sur le bac d'équarrissage lorsque celui-ci est dans sa position redressée.

Dans le mode de réalisation plus particulièrement illustré sur les figures, la pièce accrochage 34 peut équiper l'extrémité supérieure d'un des montants 22 de la structure support 20.

À son extrémité libre, le bras d'accrochage 32 peut être biseauté, à la manière d'une came, de manière à être repoussé depuis sa position de verrouillage dans une position relevée sous le passage de la pièce accrochage 34 pour être ensuite à même de s'engager automatiquement dans cette dernière.

De même, partant de la position du bac 2 visible dans la figure 6 pour atteindre celle visible dans la figure 1, ce bac 2 est reposé au sol et le palonnier 12 est abaissé, conduisant les moyens d'articulation 18 à regagner leur 1^{re} position 24 en suivant inversement la trajectoire curviligne imposée par les coulisses 28. Précisément, en regagnant cette 1^{re} position 24, les moyens de retenue 26 sont activés tout comme les moyens de blocage en rotation 29.

Dans le mode de réalisation illustré, cette activation des moyens de blocage rotation 29 résulte de la coopération du bras accrochage 32 avec la pièce accrochage 34.

On comprend que, pour assurer le déversement du bac 2 lorsque celui-ci est, par exemple, relevé au-dessus d'une benne, il suffit de tirer sur le bras de commande 33, ce qui peut se faire à distance au moyen d'une corde ou d'une chaîne de tirage.

La présente invention n'est toutefois pas limitée à un tel mode de réalisation de ces moyens de blocage rotation 29. Ceux-ci peuvent, en effet, emprunter d'autres formes d'exécution à la portée de l'homme du métier. En particulier, ils peuvent se présenter sous forme d'un doigt d'accrochage agissant, par exemple, horizontalement entre le palonnier 12 et le bac d'équarrissage 2, voire la structure support 20. Quant aux moyens de retenue 26, ils peuvent se présenter sous forme d'un loquet maintenant les moyens d'articulation 18 dans leur première position 24 le long des coulisses 28. Les moyens de commande déblocage 27, équipant, par exemple, le bac d'équarrissage 2 ou la structure support 20, peuvent être définis par un doigt de commande ou conçu pour repousser le loquet précité et libérer les moyennes articulations 18, afin de leur permettre de gagner la seconde position 25 au travers de leur déplacement le long des coulisses 28.

Dans une autre forme de réalisation, partant de la première position 24 la trajectoire curviligne à laquelle sont soumises les moyens d'articulation 18 au travers des coulisses 28, est précédé d'un tronçon de trajectoire rectiligne horizontale de faible longueur venant définir ces moyens de retenue 26.

Plus précisément, en étant engagés dans cette portion rectiligne horizontale les moyens d'articulation 18 ont tendance à persister dans leur 1^{re} position 24. Ce n'est qu'au travers du basculement du bac d'équarrissage 2 et de l'inertie de rotation imprimée à ce dernier, que les moyennes articulations 18 parcourent ce tronçon de trajectoire rectiligne pour emprunter la trajectoire curviligne leur permettant de gagner la seconde position 25.

Les avantages découlant de la présente invention consistent en une parfaite gestion du déversement du contenu de bacs d'équarrissage avec une garantie de rétablissement automatique permettant de reposer au sol ces bacs d'équarrissage dans leur position normale d'usage, en évitant leur redressement manuel.

## Revendications

1. Dispositif de manutention de bac d'équarrissage comportant un palonnier 12 de structure sensiblement en U comprenant une traverse de manutention13 reliant, sensiblement par une 14 de leurs extrémités 14 ; 15, deux bras de préhension 16, 17 s'étendant de part et d'autre de parois opposées 5, 7 du bac d'équarrissage 2 ou d'une structure support 20 d'au moins un bac d'équarrissage 2, et rendus solidaires, respectivement, dudit bac d'équarrissage 2 ou de ladite structure support 20 par l'intermédiaire de moyens d'articulation 18 autour d'un même axe horizontal de pivotement 19, lesdits moyens d'articulation 18 sur les côtés opposés 5, 7 du bac d'équarrissage 2 ou de la structure support 20 sont rendus solidaires de ce dernier de manière mobile selon une course C de déplacement déterminée par rapport au centre de gravité 23 du bac d'équarrissage 2 et/ou de ladite structure support 20, lesdits moyens d'articulation 18 étant mobiles entre une première position 24 définissant un axe horizontal de pivotement 19 du bac équarrissage 2 ou, selon le cas, de la structure support 20 de ce bac d'équarrissage 2, se situant en dessous du centre de gravité 23, selon le cas, de ce bac d'équarrissage 2 et de la structure support 20 sur laquelle il est monté, et au moins une deuxième position 25 où l'axe de pivotement 19 se situe au-dessus de ce centre de gravité 23, **caractérisé en ce qu'**il comporte encore des moyens de retenue 26 desdits moyens d'articulation 18 dans leur première position 24, ainsi que des moyens de commande définis pour débloquer ces moyens de retenue 26 en cours de déversement du bac d'équarrissage et/ou lorsque celui est en position renversée.

2. Dispositif de manutention de bac d'équarrissage selon la revendication 1, **caractérisé en ce que** les moyens d'articulation 18 sont montés sur des coulisses 28 équipant les côtés opposés 5, 7 du bac d'équarrissage 2 ou les montants 22 de la structure support 20.

3. Dispositif de manutention de bac d'équarrissage selon la revendication 2, **caractérisé en ce que** les coulisses 28 décrivent une trajectoire de coulissement curviligne, sensiblement en arc de cercle, conçue pour être empruntées par les moyens d'articulation 18.

4. Dispositif de manutention de bac d'équarrissage selon l'une des revendications 1 à 3, **caractérisé en ce que** les moyens de retenue 26 sont définis à rappel automatique en position active de retenue.

5. Dispositif de manutention de bac d'équarrissage selon l'une quelconque des revendications précédentes, **caractérisé en ce qu'**il comporte des moyens de blocage en rotation 29 du palonnier 12 dans une position redressée par rapport au bac d'équarrissage 2.

6. Dispositif de manutention de bac d'équarrissage selon la revendication 5, **caractérisé en ce que** les moyens de blocage en rotation 29 du palonnier 12 sont conçus à commande de déblocage manuel.

## Patentansprüche

1. Vorrichtung zum Handhaben eines Tierkörperbeseitigungsbehälters, die einen Heber 12 mit im Wesentlichen U-förmiger Struktur aufweist, umfassend einen Handhabungsquerträger 13, der im Wesentlichen durch eines 14 seiner Enden 14, 15 zwei Greifarme 16, 17 verbindet, die sich auf beiden Seiten von gegenüberliegenden Wänden 5, 7 des Tierkörperbeseitigungsbehälters 2 oder einer Tragestruktur 20 mindestens eines Tierkörperbeseitigungsbehälters 2 erstrecken und jeweils mit dem Tierkörperbeseitigungsbehälter 2 oder der Tragestruktur 20 durch Gelenkmittel 18 um eine gleiche horizontale Schwenkachse 19 fest verbunden sind, wobei die Gelenkmittel 18 auf den gegenüberliegenden Seiten 5, 7 des Tierkörperbeseitigungsbehälters 2 oder der Tragestruktur 20 mit dieser so fest verbunden sind, dass sie entlang eines bestimmten Verschiebungswegs C in Bezug auf den Schwerpunkt 23 des Tierkörperbeseitigungsbehälters 2 und/oder der Tragestruktur 20 beweglich sind, wobei die Gelenkmittel 18 zwischen einer ersten Position 24, die eine horizontale Schwenkachse 19 des Tierkörperbeseitigungsbehälters 2 oder je nachdem der Tragestruktur 20 des Tierkörperbeseitigungsbehälters 2 definiert, die sich unterhalb des Schwerpunkts 23 je nachdem des Tierkörperbeseitigungsbehälters 2 oder der Tragestruktur 20, auf der er montiert ist, befindet, und mindestens einer zweiten Position 25, in der sich die Schwenkachse 19 oberhalb des Schwerpunkts 23 befindet, beweglich sind, **dadurch gekennzeichnet, dass** sie ferner Haltemittel 26 zum Halten der Gelenkmittel 18 in ihrer ersten Position 24 sowie Steuermittel aufweist, die dazu definiert sind, die Haltemittel 26 während des Entleerens des Tierkörperbeseitigungsbehälters und/oder wenn sich dieser in umgekehrter Position befindet, zu entriegeln.

2. Vorrichtung zum Handhaben eines Tierkörperbeseitigungsbehälters nach Anspruch 1, **dadurch gekennzeichnet, dass** die Gelenkmittel 18 an Gleitstücke 28 montiert sind, mit denen die gegenüberliegenden Seiten 5, 7 des Tierkörperbeseitigungsbehälters 2 oder die Pfosten 22 der Tragestruktur 20 ausgestattet sind.

3. Vorrichtung zum Handhaben eines Tierkörperbeseitigungsbehälters nach Anspruch 2, **dadurch gekennzeichnet, dass** die Gleitstücke 28 eine kurvenförmige, im Wesentlichen kreisbogenförmige Gleitbahn beschreiben, die dazu ausgebildet ist, von den Gelenkmittel 18 durchlaufen zu werden.

4. Vorrichtung zum Handhaben eines Tierkörperbeseitigungsbehälters nach einem der Ansprüche 1 bis 3, **dadurch gekennzeichnet, dass** die Haltemittel 26 dazu definiert sind, automatisch in die aktive Halteposition zurückkehren.

5. Vorrichtung zum Handhaben eines Tierkörperbeseitigungsbehälters nach einem der vorstehenden Ansprüche, **dadurch gekennzeichnet, dass** sie Drehsicherungsmittel 29 zum Absichern des Hebers 12 in einer aufgerichteten Position relativ zum Tierkörperbeseitigungsbehälter 2 aufweist.

6. Vorrichtung zum Handhaben eines Tierkörperbeseitigungsbehälters nach Anspruch 5, **dadurch gekennzeichnet, dass** die Drehsicherungsmittel 29 zum Absichern des Hebers 12 mit einer manuellen Entriegelungssteuerung ausgebildet sind.

## Claims

1. Rendering bin handling device comprising a spreader bar 12 of a substantially U-shaped structure that comprises a handling crossbar 13 connecting, substantially at one 14 of their ends 14; 15, two gripping arms 16, 17 which extend on either side of opposite walls 5, 7 of the rendering bin 2 or of a support structure 20 for at least one rendering bin 2 and are rigidly connected respectively to said rendering bin 2 or to said support structure 20 by hinge means 18 about the same horizontal pivot axis 19, said hinge means 18 on the opposite sides 5, 7 of the rendering bin 2 or of the support structure 20 are rigidly connected to the bin so as to be movable along a displacement path C determined with respect to the center of gravity 23 of the rendering bin 2 and/or of said support structure 20, said hinge means 18 being movable between a first position 24 defining a horizontal pivot axis 19 of the rendering bin 2 or, as the case may be, of the support structure 20 of this rendering bin 2, located below the center of gravity 23, as the case may be, of this rendering bin 2 and of the support structure 20 on which it is mounted, and at least one second position 25 in which the pivot axis 19 is located above this center of gravity 23, **characterized in that** it further comprises means 26 for retaining said hinge means 18 in their first position 24, and control means defined as being for releasing these retaining means 26 during tipping of the rendering bin and/or when the bin is in the overturned position.

2. Rendering bin handling device according to claim 1, **characterized in that** the hinge means 18 are mounted on slides 28 fitted to the opposite sides 5, 7 of the rendering bin 2 or to the uprights 22 of the support structure 20.

3. Rendering bin handling device according to claim 2, **characterized in that** the slides 28 describe a curvilinear sliding path, substantially in the shape of an arc of a circle, designed to be followed by the hinge means 18.

4. Rendering bin handling device according to any of claims 1 to 3, **characterized in that** the retaining means 26 are defined as having automatic return to the active retaining position.

5. Rendering bin handling device according to any of the preceding claims, **characterized in that** it comprises means 29 for preventing rotation of the spreader bar 12 in an upright position relative to the rendering bin 2.

6. Rendering bin handling device according to claim 5,
**characterized in that** the means 29 for preventing rotation of the spreader bar 12 are designed as having manual release control.
